# EUROPEAN PATENT APPLICATION

(11) **EP 3 222 997 A1**
(43) Date of publication of application: **27.09.2017**
(21) Application number: 15860167.4
(22) Date of filing: 18.11.2015
(51) Int. Cl.: G01N 21/359

(54) **QUALITY EVALUATION METHOD AND QUALITY EVALUATION DEVICE**

(30) Priority: 21.11.2014 JP 2014236690
(71) Applicant: Sumitomo Electric Industries, Ltd., Osaka-shi, Osaka 541-0041 (JP); Cyfuse Biomedical K. K., Bunkyo-ku Tokyo 1130033 (JP); Kyoto Stem Cell Innovation Inc., Kyoto-shi, Kyoto 600-8491 (JP)
(72) Inventor: SUGANUMA, Hiroshi, Yokohama-shi, Kanagawa 244-8588 (JP); OKUNO, Takuya, Yokohama-shi, Kanagawa 244-8588 (JP); MOTOMURA, Asako, Yokohama-shi, Kanagawa 244-8588 (JP); AKIEDA, Shizuka, Tokyo 113-0033 (JP); TSUJI, Manami, Tokyo 113-0033 (JP); OKINA, Yuna, Yokohama-shi, Kanagawa 244-8588 (JP); SUGIYAMA, Yoko, Yokohama-shi, Kanagawa 244-8588 (JP); AIBA, Kazuhiro, Kyoto-shi, Kyoto 600-8491 (JP); LIU, Li, Kyoto-shi, Kyoto 600-8491 (JP)
(74) Representative: Hoffmann Eitle
(86) International application number: PCT/JP2015/082415
(87) International publication number: WO 2016/080442

(57) **Abstract**

A quality evaluation method includes an acquisition step of acquiring spectral data related to transmitted light or diffusely reflected light from a cell mass by irradiating the cell mass with measurement light including near-infrared light, and an evaluation step of evaluating quality of the cell mass, based on the spectral data of the cell mass acquired in the acquisition step.

## Description

### Technical Field

The present invention relates to a quality evaluation method and a quality evaluation device of a cell mass.

### Background Art

Various studies have been made on methods for evaluating the culture state of cells. For example, Patent Literature 1 discloses a configuration in which evaluation is performed by acquiring time series images of a cell mass for the purpose of determining the degree of maturity of a cell mass. Further, Patent Literature 2 discloses a configuration in which a fluorescent image is captured after a cell mass is fluorescently stained, and evaluation is performed based thereon.

### Citation List

### Patent Literature

[Patent Literature 1] International Publication No. 2011/013319
[Patent Literature 2] Japanese Unexamined Patent Publication No. 2013-27368

### Summary of Invention

### Technical Problem

However, in the methods described in the above Patent Literatures 1 and 2, evaluating the quality of a cell mass, which is the activity or activity degree of the cell mass, in a non-destructive manner has not been studied.

The present invention has been made in view of the above problems, and an object of the invention is to provide a quality evaluation method and a quality evaluation device, which are capable of evaluating the quality of a cell mass in a non-destructive manner.

### Solution to Problem

In order to achieve the above object, a quality evaluation method according to an aspect of the present invention is a quality evaluation method including (1) an acquisition step of acquiring spectral data related to transmitted light or diffusely reflected light from a cell mass by irradiating the cell mass with measurement light including near-infrared light, and an evaluation step of evaluating a quality of the cell mass, based on the spectral data of the cell mass acquired in the acquisition step. Here, "spectral data" means data including the intensities of light in a plurality of wavelengths.

Further, a quality evaluation device according to an aspect of the present invention is a quality evaluation device including (2) a light source that irradiates a cell mass with measurement light including near-infrared light, a light receiving unit that acquires spectral data related to the cell mass by receiving transmitted light or diffusely reflected light which is emitted from the cell mass by irradiation of the measurement light from the light source, and an analyzing unit that evaluates a quality of the cell mass, based on the spectral data received by the light receiving unit.

### Advantageous Effects of Invention

According to the present invention, there are provided a quality evaluation method and quality evaluation device, which are capable of evaluating a quality of a cell mass in a non-destructive manner.

### Brief Description of Drawings

FIG. 1 is a schematic configuration diagram of a quality evaluation device according to the present embodiment.
FIG. 2 is a diagram illustrating a hyperspectral image.
FIG. 3 is a diagram illustrating a change in a spectral shape which comes from a change in quality.
FIG. 4 is a diagram illustrating an analysis example using principal component analysis.
FIG. 5 is a diagram illustrating an analysis example using principal component analysis.
FIG 6 is a diagram illustrating an analysis example using principal component analysis.
FIG. 7 is a diagram illustrating an analysis example using a support vector machine (SVM).

### Description of Embodiments

### [Description of an embodiment of the present Invention]

First, embodiments of the present invention will be listed and described.
(1) A quality evaluation method of the present application includes an acquisition step of acquiring spectral data related to transmitted light or diffusely reflected light from a cell mass by irradiating the cell mass with measurement light including near-infrared light, and an evaluation step of evaluating a quality of the cell mass, based on the spectral data of the cell mass acquired in the acquisition step. According to such a quality evaluation method, spectral data related to transmitted light or diffusely reflected light is acquired and the quality of a cell mass is evaluated based on the spectral data, thereby evaluating the quality of the cell mass in a non-destructive manner.
(2) In the acquisition step, spectral data related to transmitted light or diffusely reflected light from each of a plurality of cell masses accommodated in a culture vessel may be acquired, and in the evaluation step, qualities of the plurality of cell masses may be evaluated for each culture vessel, based on the spectral data of the plurality of cell masses acquired in the acquisition step. In this case, it is possible to evaluate the cell mass for each culture vessel.
(3) In the evaluation step, the qualities of the plurality of cell masses may be evaluated, based on variation in the spectral data of the plurality of cell masses acquired in the acquisition step. In a case where there is a problem with quality, there is a variation in the spectral data of a plurality of cell masses, and thus evaluation of the quality of the cell mass for each culture vessel can be performed with higher accuracy, based thereon.
(4) In the evaluation step, the quality of the cell mass may be evaluated, by comparing the spectral data of the cell mass acquired in the acquisition step with reference spectral data acquired separately from the acquisition step. Evaluation with high accuracy becomes possible by evaluating the quality of a cell mass by comparison with the reference spectral data.
(5) In the evaluation step, the quality of the cell mass may be evaluated, by comparing the intensity of transmitted light or diffusely reflected light in a specific wavelength included in the spectral data of the cell mass acquired in the acquisition step with a preset threshold. In a case of evaluating the quality by comparison with the threshold, it is possible to more easily evaluate the quality.
(6) In the acquisition step, a plurality of spectral data items related to transmitted light or diffusely reflected light related to the cell mass may be acquired over time, and in the evaluation step, the quality of the cell mass may be evaluated, based on a change over time of the plurality of spectral data items of the cell mass acquired in the acquisition step. In the case of such a configuration, it is possible to check a change over time of the cell mass from the spectral data, thereby accurately evaluating the quality.
(7) In the evaluation step, the quality of the cell mass may be evaluated by multivariate analysis for the spectral data of the cell mass acquired in the acquisition step, using reference spectral data of a known quality which is acquired separately from the acquisition step. Evaluation of the quality can be performed with high accuracy, by using multivariate analysis.
(8) In the evaluation step, the quality of the cell mass may be evaluated by machine learning pattern recognition for the spectral data of the cell mass acquired in the acquisition step, using reference spectral data of a known quality which is acquired separately from the acquisition step. Evaluation of the quality can be performed with high accuracy, by using machine learning pattern recognition.
(9) A quality evaluation device of the present application includes a light source that irradiates a cell mass with measurement light including near-infrared light, a light receiving unit that acquires spectral data related to the cell mass by receiving transmitted light or diffusely reflected light which is emitted from the cell mass by irradiation of the measurement light from the light source, and an analyzing unit that evaluates a quality of the cell mass, based on the spectral data received by the light receiving unit. According to such a quality evaluation device, spectral data related to transmitted light or diffusely reflected light is acquired and the quality of a cell mass is evaluated based on the spectral data, thereby evaluating the quality of the cell mass in a non-destructive manner.

### [Details of embodiments of the present Invention]

Specific examples of a quality evaluation method and a quality evaluation device according to the present invention will be described below with reference to the drawings. It is to be noted that the present invention is not limited to these examples, but is indicated by the scope of claims, meaning equivalent to the scope of claims and all modifications within the scope are intended to be included.

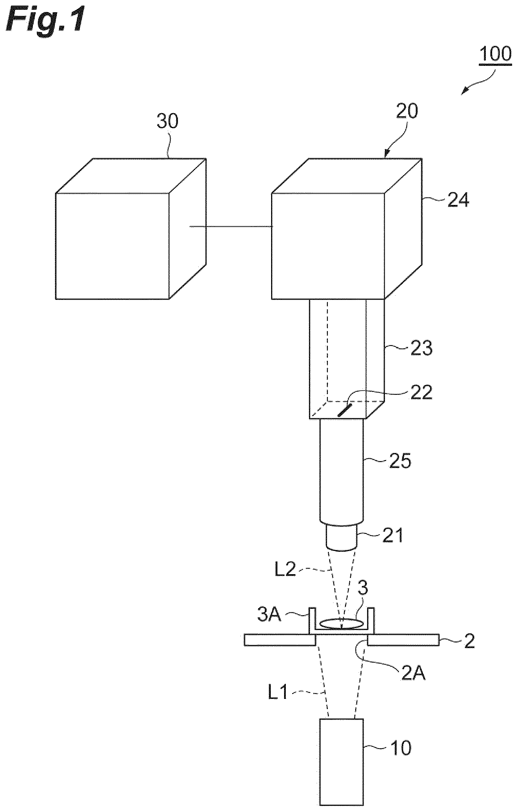

A quality evaluation device 100 according to the present embodiment will be described with reference to FIG 1. The quality evaluation device 100 is a device that evaluates the quality of a cell mass 3 placed on a moving stage 2. In this specification, the cell mass 3 includes various forms of cells such as a single cell, a one-dimensional mass, a two-dimensional mass, and a three-dimensional mass, and the cell mass 3 consists of cells collected from animals or humans, stem cells prepared on the basis of them, or cells differentiated from stem cells, in which cells of a plurality of cell types are mixed. In addition, "quality" evaluated by the quality evaluation device 100 refers to "activity", "activity degree", or "safety in the body" of a cell. These are indexes related to an ability to maintain a life cycle, such as cell proliferation, an aggregation ability, an ability to become a specific tissue cell, an ability to maintain a necessary function as a cell, an ability to aggregate cell mass, and a tissue regeneration ability in a body of animal or human.

The quality evaluation device 100 receives transmitted light emitted from the cell mass 3 by irradiating the cell mass 3 with measurement light which is near-infrared light to acquire spectral data (acquisition step), and evaluates quality of the cell mass 3, based on the spectral data (evaluation step). For this, the quality evaluation device 100 includes a light source 10, detection means 20, and analyzing means 30 (evaluation means). In the following embodiment, the case where near-infrared light is used for spectroscopic measurement will be described. However, at least near-infrared light may be included as a part of measurement light, or even light in another wavelength range may be used for measurement. Alternatively, evaluation may be performed by acquiring spectral data of diffusely reflected light, instead of spectral data of the transmitted light.

The light source 10 irradiates a predetermined area provided on the moving stage 2 with the measurement light including near-infrared light. The wavelength range of the measurement light emitted by the light source 10 is appropriately selected depending on the cell mass 3. Specifically, as the measurement light, light in a wavelength range of 800 nm to 2500 nm is used, and particularly, light of 1000 nm to 2300 nm is used. Since the near-infrared light rays in the wavelength ranges have vibration absorption (harmonic overtones, coupled sound) of substances, it is possible to obtain characteristics of the cell mass 3 which is a measurement object by combining them. In a case of using the measurement light of near-infrared light, it is possible to perform measurement using light in a wavelength range different from a water absorption band, for example, light in wavelength ranges of 1500 nm to 1800 nm (especially, 1650 nm to 1750 nm) and 2000 nm to 2300 nm can be used. It is also possible to use spectral data acquired by using light in the wavelength range of 1500 nm to 1900 nm (especially 1530 nm to 1850 nm) for evaluation. In the present embodiment, the light source 10 made of a halogen lamp is described, but the type of the light source 10 is not particularly limited.

The light source 10 generates measurement light L1 including near-infrared light and emits it toward an opening 2A of the moving stage 2 in which the cell mass 3 is provided. In addition, the light source 10 may include a waveguide optical system such as an optical fiber for irradiating the cell mass 3 with the measurement light

The measurement light L1 output from the light source 10 passes through the cell mass 3 accommodated in a container 3A on the opening 2A. Then, a part thereof is incident on the detection means 20 as transmitted light L2.

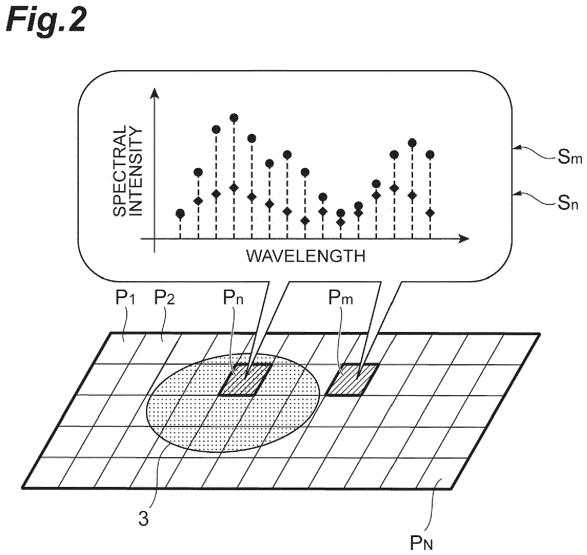

The detection means 20 has a function as a hyperspectral sensor acquiring a hyperspectral image by sensors two dimensionally arranged. Here, the hyperspectral image in the present embodiment will be described with reference to FIG 2. FIG 2 is a schematic diagram illustrating a hyperspectral image. As shown in FIG 2, the hyperspectral image is an image including N unit areas P₁ to P_{N}. FIG 2 specifically shows two unit areas Pₙ and Pₘ as an example of them. For the unit areas Pₙ and Pₘ, there are spectrum information Sₙ and Sₘ configured with a plurality of intensity data, respectively. The intensity data is data indicating a spectral intensity at a specific wavelength (or wavelength band), and FIG 2 shows a state where 15 pieces of strength data are held as the spectral information Sₙ and Sₘ, and are superimposed respectively. As described above, based on the feature that there is a plurality of intensity data for each of the unit areas constituting an image, a hyperspectral image H is data of a three-dimensional configuration having a two-dimensional element as an image and an element as spectral data. In the present embodiment, the hyperspectral image H refers to an image having intensity data in at least five wavelength bands per one unit area.

FIG 2 also shows the cell mass 3. That is, in FIG. 2, the Pₙ is a unit area obtained by capturing the cell mass 3, and the Pₘ is a unit area on the background (for example, the container 3A). As described above, not only the cell mass 3 but also the image obtained by capturing an image of the background are acquired by the detection means 20.

Returning to FIG 1, the detection means 20 according to the present embodiment includes an objective lens 21, a slit 22, a spectroscopic element 23, and a light receiving unit 24. A lens barrel 25 is provided between the objective lens 21 and the slit 22.

The slit 22 includes an opening formed in one direction (a direction crossing the paper surface). The transmitted light L2 that has passed through the lens barrel 25 from the objective lens 21 of the detection means 20 and has been incident on the slit 22 is incident on the spectroscopic element 23.

The spectroscopic element 23 separates the transmitted light L2 in a direction perpendicular to the longitudinal direction of the slit 22. The light split by the spectroscopic element 23 is received by the light receiving unit 24.

The light receiving unit 24 includes a light receiving surface in which a plurality of light receiving elements are two-dimensionally arranged, in which the respective receiving elements receive light Thereby, in the light receiving unit 24, the respective light receiving elements, arranged in a direction perpendicular to the extending direction of the slit 22, receive light in each wavelength of the transmitted light L2 transmitted through the cell mass 3, in an area along the extending direction of the slit 22 on the moving stage 2. Each light receiving element outputs a signal corresponding to the intensity of the received light as information on one point of a two-dimensional planar shape including a position and a wavelength. A signal output from the light receiving element of the light receiving unit 24 is sent from the detection means 20 to the analyzing means 30, as spectral data for each unit area related to the hyperspectral image.

The analyzing means 30 acquires the spectral data of the transmitted light L2 from the input signal, and performs evaluation on the cell mass 3 by using the spectral data.

The analyzing means 30 is formed of a computer including hardware such as a central processing unit (CPU), a random access memory (RAM) and a read only memory (ROM) which are main storage devices, a communication module performing communication with other devices such as the detection means 20, and an auxiliary storage device such as a hard disk. The function as the analyzing means 30 is exerted by the constituent elements being operated.

The above quality evaluation device 100 can acquire a so-called one-dimensional spectrum image for an area along the extending direction of the slit, by one imaging. Therefore, it is possible to acquire spectral data on the entire cell mass 3 by moving the moving stage 2 on which the cell mass 3 is placed, or by moving the imaging area of the quality evaluation device 100.

The analyzing means 30 acquires in advance incident light spectrum related to the incident light in the state without the cell mass 3 in addition to the measurement of the spectral data related to the cell mass 3, and is able to obtain spectral data (transmission spectrum) related to the transmitted light which comes from the cell mass 3 from a difference between the incident light spectrum and the spectral data of the transmitted light L2 of the cell mass 3. The evaluation of the cell mass 3 is performed using the transmission spectrum.

Generally, a plurality of cell masses 3 are accommodated in one plate (culture vessel). Therefore, in a case of evaluating the quality of a cell mass, evaluation is not performed on a cell mass one by one, but collectively performed on a plurality of cell masses accommodated in one plate (culture vessel). Such an evaluation method tends to be adopted in the field of regenerative medicine. In the following description about the evaluation method, both an evaluation method on a per cell mass 3 basis and an evaluation method on a per plate basis will be described.

In the following description, the case of classifying the cell mass to be evaluated into two classes of "non-defective product" and "defective product" as "quality evaluation", but for example, as the cell mass may be classified into three or more classes. In that case, a plurality of criteria for classification according to the number of classification destinations are set.

In a case of performing evaluation on a per cell mass 3 basis, a process such as averaging for the plurality of transmission spectra acquired for one cell mass 3 is performed, and thereafter the average transmission spectrum is compared with the spectral data for a non-defective product acquired as a reference spectrum, such that it is possible to perform evaluation as to whether it is a non-defective product or a defective product. In this case, with respect to the reference spectrum and the transmission spectrum of the cell mass 3 which is a measurement object, in addition to the method of comparing spectral shapes, a method can be used which sets in advance a threshold for a difference from the reference spectrum with respect to the intensity of the transmitted light in a specific wavelength included in the spectral data, and determines it as a defective product in a case where the difference exceeds the threshold. Alternatively, instead of using the reference spectrum, a threshold is set in advance for the intensity of transmitted light in a specific wavelength included in spectral data, and the quality of a cell mass can be evaluated based on the threshold. In this case, since the reference spectrum is not used, evaluation can be performed more easily.

Another evaluation method can be configured such that a transmission spectrum of the cell mass 3 is acquired at every elapsed time (for example, about 36 to 48 hours at every 6 to 10 hours), and the quality of the cell mass 3 is evaluated, based on a change over time of the spectral data. In this case, it is possible to check a change over time of the cell mass from the spectral data, thereby accurately evaluating the quality. As described above, since there are various methods of evaluating the quality based on the transmission spectrum of the cell mass 3, a method can be selected as appropriate according to the type and state of a cell mass to be evaluated.

On the other hand, in the case of evaluating the qualities of a plurality of cell masses on a per plate basis, there are a first method of calculating one transmission spectrum for a plurality of cell masses 3 accommodated in the same plate and performing evaluation based on the transmission spectrum, and a second method of calculating a plurality of transmission spectra for each of a plurality of cell masses 3 accommodated in the same plate and performing evaluation based on the transmission spectra.

In the case of the first method, respective transmission spectra are obtained by measuring spectra for the plurality of cell masses 3 accommodated in the same plate, and thereafter one spectral data used in the evaluation of the cell mass on the plate is calculated after performing a process of averaging or the like. It is possible to evaluate the quality using the same method as in the above-described evaluation on a per cell mass 3 basis, such as a method of comparing the spectral data with, for example, the reference spectrum.

On the other hand, in the case of the second method, spectral data on a plurality of cell masses 3 accommodated in the same plate is acquired, transmission spectra thereof are respectively obtained, and evaluation is performed using the transmission spectra. Specifically, it is possible to use a method of determining whether it is a non-defective product or not based on whether variation (standard deviation) of the transmission spectra of the plurality of cell masses 3 accommodated in the same plate is within a predetermined threshold.

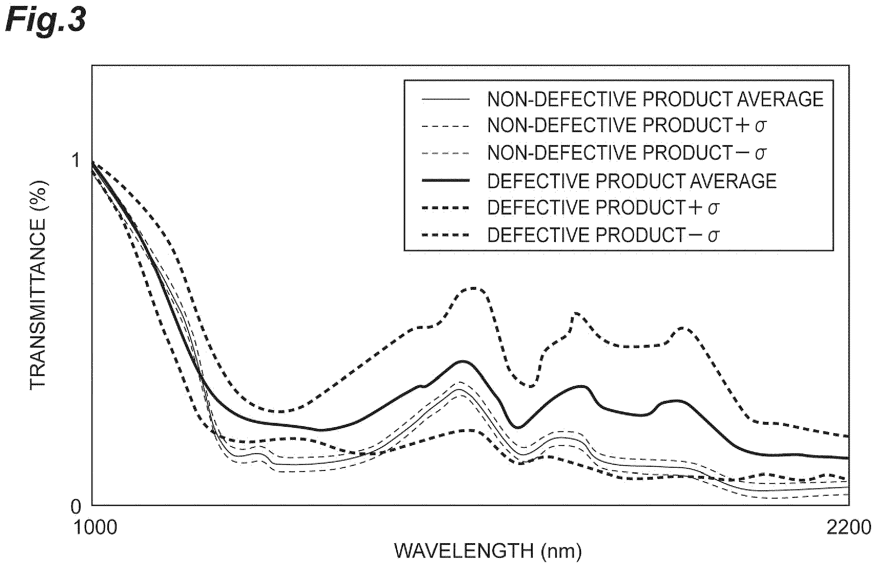

The evaluation using the above second method will be described with reference to FIG 3. FIG. 3 is a graph showing the variation in the transmission spectrum of a plate of a plurality of cell masses 3 containing only non-defective products and a plate of a plurality of cell masses 3 containing defective products. Spectra of eight cell masses for each plate (culture vessel) are measured by the method described in the above embodiment, and the average and standard deviation of the transmission spectra are obtained for each plate, with respect to the obtained transmission spectra. FIG 3 shows the average, +σ and -σ spectra for each of the non-defective product plate and the defective product plate. As a result of integrating the standard deviation of the transmission intensity at intervals of 6 nm in the wavelength range of 1550 nm to 1750 nm, the integrated standard deviation of the transmission spectrum obtained by measuring the cell mass in the plate of non-defective products is 1.1, whereas the integrated standard deviation of the transmission spectrum obtained by measuring the cell mass in the plate of defective products is 11.1. As described above, since there is about a ten-fold difference between the integrated standard deviations of the plate of non-defective products and the plate of defective products, it is checked that it is possible to perform quality evaluation (determination as to whether it is a non-defective product or a defective product), based on the integrated standard deviation.

Furthermore, as another method in the case of evaluating a cell mass, there is a method of performing a pretreatment such as normalization on the spectral data acquired for a cell mass to be evaluated, and thereafter evaluating the quality of the cell mass by multivariate analysis, using reference spectral data. In this method, one spectral data may be prepared on a per cell mass basis which is subjected to quality evaluation. Therefore, in a case of performing evaluation at every cell mass 3, spectral data to be used for evaluation is prepared from one or more spectral data of one cell mass 3. Further, in a case of evaluating a cell mass for each plate, spectral data to be used for evaluation is prepared from one or more spectral data related to the cell mass of a target plate.

The reference spectral data used for multivariate analysis is a plurality of spectral data items acquired from a cell mass of a known quality. For example, in a case of performing determination as to whether it is a non-defective product or a defective product, the spectral data of each of the non-defective product and the defective product is prepared. In this way, reference spectral data is prepared according to the quality to be evaluated. In addition, examples of multivariate analysis include principal component analysis, regression analysis, factor analysis, and the like, but are not limited thereto.

In the case of performing quality evaluation of a cell mass using the principal component analysis, first, the principal component analysis is performed using reference spectral data, one or more principal components affected by quality are specified, and the range of the score of each principal component according to quality is specified. In other words, by performing the principal component analysis, spectral data of cell masses having different qualities can be classified according to the score value of the principal components. Thereafter, the score of each principal component is calculated for the spectral data related to the cell mass to be evaluated, and the quality of the cell mass to be evaluated can be determined based on the calculated score value of the principal component.

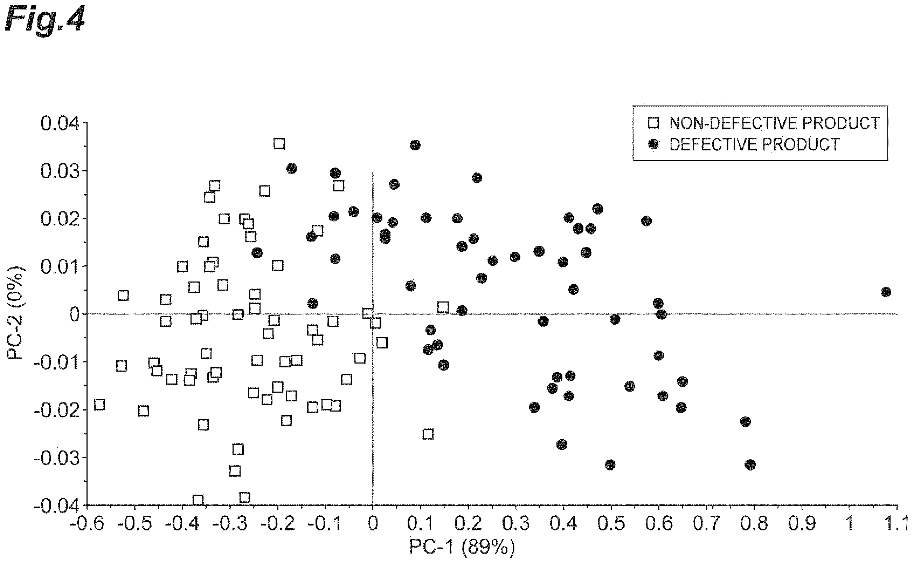

The following three examples of quality evaluation using multivariate analysis will be described. First, an example of classifying a cell mass into a non-defective product or a defective product will be described with reference to FIG 4. A plurality of spectral data items including absorbance spectra related to a cell mass belonging to either a non-defective product or a defective product are obtained, and a pretreatment such as normalization is performed. Subsequently, principal component analysis is performed using spectral data in the wavelength range of 1530 nm to 1850 nm. FIG. 4 is the result of plotting each spectral data based on the score of each principal component, with a first principal component and a second principal component which are obtained as a result of principal component analysis, as a horizontal axis and a vertical axis, respectively. As shown in FIG. 4, it is confirmed that the score of the first principal component is biased between non-defective products and defective products. Therefore, even for a cell mass to be evaluated of which quality is unknown, it is possible to perform determination as to a non-defective product or a defective product by calculating the score of the first principal component.

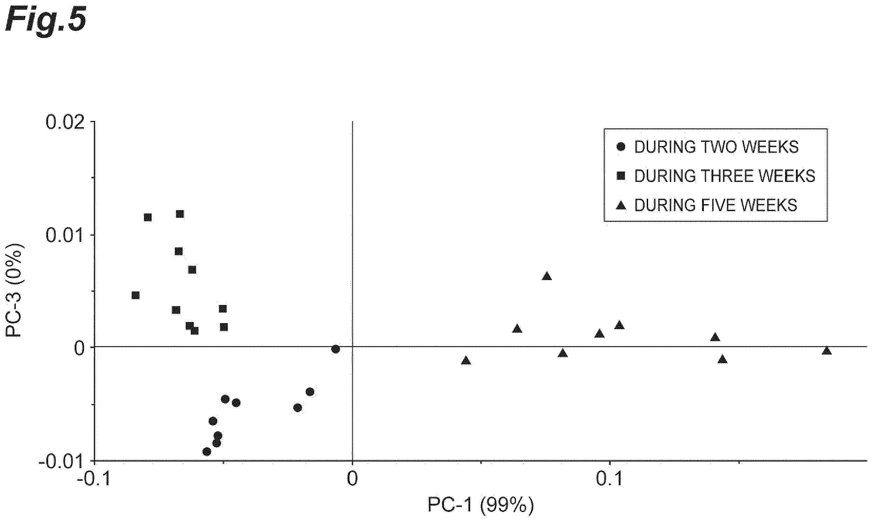

Next, an example of classifying a culture period of a cell mass will be described with reference to FIG 5. Specifically, cells after two weeks, after three weeks, and after five weeks from induction of iPS cell-derived cardiomyocytes are prepared, a plurality of spectral data items including respective absorbance spectra are obtained, and pretreatment such as normalization is performed on each of them. Subsequently, principal component analysis is performed using spectral data in the wavelength range of 1530 nm to 1850 nm. FIG 5 is the result of plotting each spectral data based on the score of each principal component, with a first principal component and a third principal component which are obtained as a result of principal component analysis, as a horizontal axis and a vertical axis, respectively. As shown in FIG 5, it is checked that the scores of the first principal component and the third principal component vary depending on the culture period after induction. Specifically, it is checked that the score of the first principal component is biased depending on whether it is five weeks or two or three weeks. It is checked that the score of the third principal component is biased between two weeks and three weeks. Therefore, the culture period as a quality can also be estimated by calculating the scores of the first principal component and the third principal component with respect to the cell (cell mass) to be evaluated of which culture period is unknown.

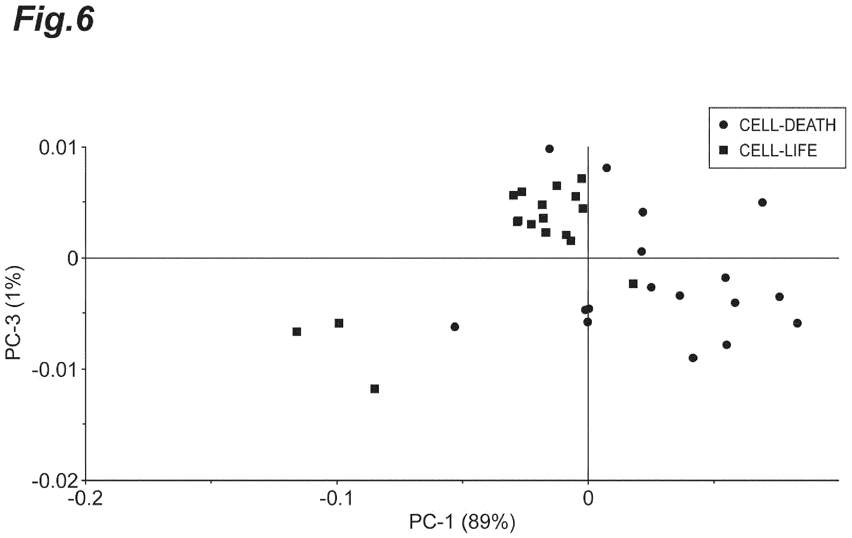

Next, an example of classifying (determining) the life and death of a cell (cell mass) will be described with reference to FIG 6. A plurality of spectral data items including absorbance spectra of mouse fibroblasts for which life and death are known are obtained, and a pretreatment such as normalization is performed. Subsequently, principal component analysis is performed using spectral data in the wavelength range of 1530 nm to 1850 nm. FIG 6 is the result of plotting each spectral data based on the score of each principal component, with a first principal component and a third principal component which are obtained as a result of principal component analysis, as a horizontal axis and a vertical axis, respectively. As shown in FIG. 6, it is confirmed that the score of the first principal component is biased depending on the life and death of a cell. Therefore, even for cells (cell mass) for which life and death are unknown, it is possible to perform determination as to life and death by calculating the score of the first principal component.

Furthermore, as another method in the case of evaluating a cell mass, there is a method of performing a pretreatment such as normalization on the spectral data acquired for a cell mass to be evaluated, and thereafter evaluating the quality of the cell mass by machine learning pattern recognition using reference spectral data. In this method, one spectral data may be prepared on a per cell mass basis which is subjected to quality evaluation. Therefore, in a case of performing evaluation at every cell mass 3, spectral data to be used for evaluation is prepared from one or more spectral data of one cell mass 3. Further, in a case of evaluating a cell mass for each plate, spectral data to be used for evaluation is prepared from one or more spectral data related to the cell mass of a target plate.

As in the case of multivariate analysis, reference spectral data used for machine learning pattern recognition is a plurality of spectral data items acquired from a cell mass of a known quality. For example, in a case of performing determination as to whether it is a non-defective product or a defective product, the spectral data of each of the non-defective product and the defective product is prepared. In this way, reference spectral data is prepared according to the quality to be evaluated. Examples of machine learning pattern recognition include a support vector machine (SVM), a kernel method, a Bayesian network method, and the like, but are not limited thereto.

In a case of evaluating the quality of a cell mass using machine learning pattern recognition, first, a criterion for separating different qualities from each other (for example, a non-defective product or a defective product) is calculated by using reference spectral data. In the case of SVM, the discrimination surface is a criterion for discrimination. Depending on an analysis method, a new space for quality evaluation may be defined and the criterion within the space may be defined in some cases. Next, with respect to the spectral data related to the cell mass to be evaluated, the quality of the cell mass to be evaluated can be determined based on the discrimination criteria generated based on the learning data.

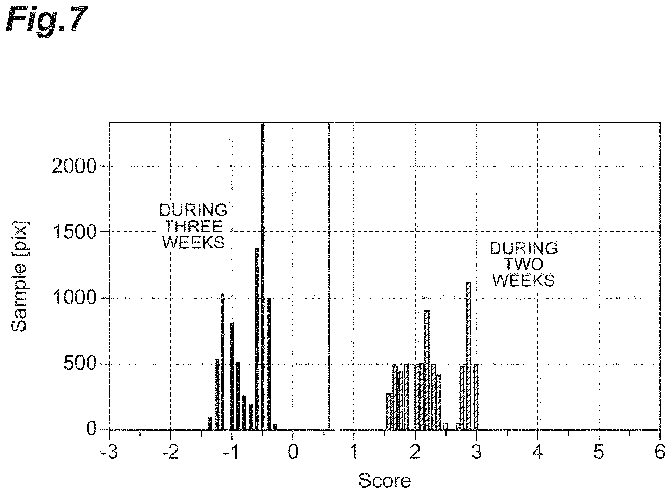

An example of quality evaluation using multivariate analysis will be described. Next, an example of classifying a culture period of a cell mass as the quality of a cell mass will be described with reference to FIG 7. Specifically, cells after two weeks, after three weeks, and after five weeks from induction of iPS cell-derived cardiomyocytes are prepared, a plurality of spectral data items including respective transmission spectra are obtained, and pretreatment such as normalization is performed on each of them. Thereafter, learning is performed based on reference spectral data, with spectral data in the wavelength range of 1530 nm to 1850 nm is used as the reference spectral data, and a discrimination surface for distinguishing cells after two weeks and three weeks is obtained. FIG. 7 is the result of plotting the score (distance from the discrimination surface) related to the reference spectral data as a histogram. As shown in FIG. 7, it is checked that the score varies depending on the culture period after induction. Therefore, the culture period as a quality can also be estimated by calculating the feature value for the cell (cell mass) to be evaluated of which culture period is unknown.

As described above, the quality evaluation device and the quality evaluation method according to the present invention are configured to perform evaluation, based on spectral data related to transmitted light or diffusely reflected light obtained by irradiating the cell mass 3 with measurement light including near-infrared light, thereby evaluating the quality of the cell mass in a non-destructive and non-invasive manner. By using near-infrared light, it is possible to obtain composition characteristics by a combination of vibration absorption (harmonic overtones, coupled sound) and the like of substances, and it is also possible to recognize a change in concentration. Therefore, it is possible to realize quality evaluation with high accuracy.

It should be noted that the quality evaluation device and the quality evaluation method according to the present invention are not limited to the above embodiment. For example, the present invention is not limited to the configuration in which the spectrometer includes the light source 10, the detection means 20, and the analyzing means 30 as in the above embodiment, and the configuration thereof can be appropriately changed.

In the above embodiments, a configuration has been described in which the quality evaluation device 100 acquires a so-called hyperspectral image in which wavelength information is allocated to each of pixels arranged in a first direction, and position information of a measurement object is allocated to each of pixels arranged in a second direction perpendicular to the first direction, among a plurality of pixels arranged in two dimensions, and spectral data of each unit area along the second direction is acquired, but other device configurations may be used.

### Reference Signs List

2: moving stage, 3: cell mass, 10: light source, 20: detection means, 30: analyzing means, 100: quality evaluation device

## Claims

1. A quality evaluation method comprising:
an acquisition step of acquiring spectral data related to transmitted light or diffusely reflected light from a cell mass by irradiating the cell mass with measurement light including near-infrared light; and
an evaluation step of evaluating a quality of the cell mass, based on the spectral data of the cell mass acquired in the acquisition step.

2. The quality evaluation method according to Claim 1,
wherein in the acquisition step, spectral data related to transmitted light or diffusely reflected light from each of a plurality of cell masses accommodated in a culture vessel is acquired, and
wherein in the evaluation step, qualities of the plurality of cell masses are evaluated for each culture vessel, based on the spectral data of the plurality of cell masses acquired in the acquisition step.

3. The quality evaluation method according to Claim 2,
wherein in the evaluation step, the qualities of the plurality of cell masses are evaluated, based on variation in the spectral data of the plurality of cell masses acquired in the acquisition step.

4. The quality evaluation method according to Claim 1 or 2,
wherein in the evaluation step, the quality of the cell mass is evaluated, by comparing the spectral data of the cell mass acquired in the acquisition step with reference spectral data acquired separately from the acquisition step.

5. The quality evaluation method according to Claim 1 or 2,
wherein in the evaluation step, the quality of the cell mass is evaluated, by comparing the intensity of transmitted light or diffusely reflected light in a specific wavelength included in the spectral data of the cell mass acquired in the acquisition step with a preset threshold.

6. The quality evaluation method according to Claim 1 or 2,
wherein in the acquisition step, a plurality of spectral data items related to transmitted light or diffusely reflected light related to the cell mass are acquired over time, and
wherein in the evaluation step, the quality of the cell mass is evaluated, based on a change over time of the plurality of spectral data items of the cell mass acquired in the acquisition step.

7. The quality evaluation method according to Claim 1 or 2,
wherein in the evaluation step, the quality of the cell mass is evaluated by multivariate analysis for the spectral data of the cell mass acquired in the acquisition step, using reference spectral data of a known quality which is acquired separately from the acquisition step.

8. The quality evaluation method according to Claim 1 or 2,
wherein in the evaluation step, the quality of the cell mass is evaluated by machine learning pattern recognition for the spectral data of the cell mass acquired in the acquisition step, using reference spectral data of a known quality which is acquired separately from the acquisition step.

9. A quality evaluation device comprising:
a light source that irradiates a cell mass with measurement light including near-infrared light;
a light receiving unit that acquires spectral data related to the cell mass by receiving transmitted light or diffusely reflected light which is emitted from the cell mass by irradiation of the measurement light from the light source; and
an analyzing unit that evaluates a quality of the cell mass, based on the spectral data received by the light receiving unit.
